Europäisches Patentamt

European Patent Office

Office européen des brevets

(19)

(11) Publication number: **0 303 970 B1**

(12) # EUROPEAN PATENT SPECIFICATION

(45) Date of publication of patent specification: **10.03.93**

(51) Int. Cl.5: **B01F 17/00, //A23J7/00**

(21) Application number: **88113067.8**

(22) Date of filing: **11.08.88**

(54) **Surfactant composition having improved functions.**

(30) Priority: **20.08.87 JP 207093/87**
**25.09.87 JP 240204/87**
**25.09.87 JP 240205/87**

(43) Date of publication of application:
**22.02.89 Bulletin 89/08**

(45) Publication of the grant of the patent:
**10.03.93 Bulletin 93/10**

(84) Designated Contracting States:
**AT BE CH DE ES FR GB GR IT LI LU NL SE**

(56) References cited:
**EP-A- 0 245 871**
**DE-A- 3 225 706**
**FR-A- 2 028 018**

(73) Proprietor: **ASAHI DENKA KOGYO KABUSHIKI KAISHA**
**2-35, Higashiogu 7-chome**
**Arakawa-ku Tokyo 116(JP)**

(72) Inventor: **Fujita, Satoshi c/o Asahi Denka Kogyo K.K.**
**2-35, 7-chome Higashiogu Arakawa-ku Tokyo(JP)**

(74) Representative: **Patentanwälte Grünecker, Kinkeldey, Stockmair & Partner**
**Maximilianstrasse 58**
**W-8000 München 22 (DE)**

EP 0 303 970 B1

**Description**

This invention relates to a lipid composition which exclusively consists of natural materials and thus has a sufficiently high safety and intense surface activities including high immersional wettability and adhesional wettability.

Highly safe surfactants which are presently applied to, for example, foods, drugs, cosmetics, feeds and agricultural chemicals include glycerophospholipid (lecithin) and substances obtained by fractionating or enzymatically treating the same, fatty acid monoglycerides, sorbitan fatty acid esters, sucrose fatty acid esters, polyglycerol fatty acid esters and fatty acid monoglyceride derivatives such as succinates, tartrates, malates and lactates, fatty acid salts, polyoxyethylene sorbitan fatty acid esters, sodium dodecylsulfate and sodium dioctylsulfosuccinate. However, there is a regulation concerning an acceptable daily uptake for each of the surfactants except lecithin and monoglycerides and the application thereof is restricted in general, so that there is no surfactant which is highly safe and yet has an intense wettability.

For example, lysophosphatidylcholine and monoacylphospholipid, which is prepared by partially hydrolyzing soya phospholipid with phospholipase A, are relatively safe and have intense surface activities. However, these surfactants are expensive. The present inventors previously completed inventions by taking advantage of relatively excellent surface activities of a composition comprising phospholipids mainly containing lysophosphatidylcholine and polyglycerol fatty acid esters, and/or sucrose fatty acid esters and/or fatty acid monoglycerides. These compositions are described in, for example, Japanese Patent Application No. 113245/1986, Japanese Patent Laid-Open No. 166425/1988 and, Japanese Patent Laid-Open No. 54926/1988 and Japanese Patent Laid-Open No. 119841/1988. However each of the compositions mentioned above shows an insufficient wettability which is much lower than that of sodium dodecylsulfate and sodium dioctylsulfosuccinate mentioned above.

Japanese Patent Laid-Open No. 122423/1984 discloses a carcinostatic-containing fat emulsion preparation which comprises one or more substances selected from among phospholipids, lecithin, hydrogenated lecithin, lysolecithin and polymer surfactants having a molecular weight of 800 to 20,000, as an emulsifier, and fatty acid(s) having 6 to 30 carbon atoms or salt(s) thereof or monoglyceride(s) as an emulsification aid in order to emulsify a fat containing a fat-soluble carcinostatic. It is described therein that this composition preferably comprises an appropriate amount of the fat-soluble carcinostatic, 8 to 35 w/v % of fat, 2 to 6 w/v % of the emulsifier and 0.001 to 0.1 w/v % of the emulsification aid such as a monoglyceride. Among the components of the emulsifier of the preparation, the total content of those which are also employed in the present invention, namely, phospholipids, lecithin and lysolecithin amounts to two to six parts, while the fatty acid monoglyceride(s) amount to 0.001 to 0.1 part. Namely, the ratio of the latter to the former ranges from 1/6000 to 5/100.

International Application WO 86/05694 discloses :
1. a composition, comprising;
a. at least one non-esterified fatty acid having 14 - 18 carbon atoms;
b. at least one monoglyceride which is a monoester of glycerol and a fatty acid having 14 - 18 carbon atoms;
c. lysophosphatidylcholine in which the fatty acid moiety has 14 - 18 carbon atoms; and
d. a drug, and
2. a composition, comprising;
a. at least one non-esterified fatty acid having 14 - 18 carbon atoms and at least one monoglyceride which is a monoester of glycerol and a fatty acid having 14 - 18 carbon atoms, said fatty acid and said monoglyceride comprising from about 70.0 mole percent to about 99.0 mole percent of the composition in a molar ratio of between 1 : 2 and about 2 : 1;
b. lysophosphatidylcholine in which the fatty acid moiety has 14 - 18 carbon atoms, said lysophosphatidylcholine comprising from about 1.0 mole percent to about 30.0 mole percent of the composition; and
c. a drug.
However, this composition comprises a fatty acid as an essential ingredient and the fatty acid constituting the monoglyceride is a saturated or unsaturated one having 14 to 18 carbon atoms.

It is described in Japanese Patent Publication No. 51241/1984 and U.S. Patent No. 3,388,999 that when a powdery composition comprising monoglyceride(s) of a saturated fatty acid having 12 to 24 carbon atoms, as the main component, and a relatively small amount of lecithin is added to a cereal product and is heated in the presence of water, said monoglyceride(s), which are in the form of $\beta$ crystals at the application, are converted into $\alpha$ crystals, which impart an affinity for starch thereto.

However, each of the compositions described in these specifications does not give an aqueous solution since it forms α crystals of gelatinous monoglyceride(s) when heated in water. Thus it cannot exert excellent surface activities such as a high immersional wettability.

Further Denmark Patent No. 101,649 describes that a composition comprising a phospholipid prepared by treating crude fat-containing lecithin originating from cereals with lipase, mono-, di- and triglycerides and the fatty acids thus formed is suitable for emulsification.

However, this composition contains a large amount of free fatty acids. Therefore, although it might be available in emulsifying a fat, it cannot be used as a surfactant having excellent surface activities such as a high immersional wettability in an aqueous solution.

The present invention provides a composition having high safety and intense surface activities including a high wettability and being inexpensive which can never be obtained by prior arts.

Thus the present invention provides a surfactant composition which consists essentially of (1) acylglycerophospholipid(s) and (2) monoglyceride(s) of fatty acid(s) containing at least 40% by weight of medium-chain fatty acids carrying 8 to 12 carbon atoms, the ratio by weight of the component (2) to the component (1) ranging from 10/90 to 90/10.

The acylglycerophospholipid (1) which is one of the essential components of the composition of the present invention is not particularly limited. From the practical viewpoint, those originating from plants or animals, such as soya phospholipid, rapeseed phospholipid or corn phospholipid, formed as byproducts in the production of oils, or egg phospholipid may be used. These phospholipids may be defatted with an organic solvent such as acetone to thereby give acylglycerophospholipids (1-2). Alternately, these phospholipids mad be partially hydrolyzed with phospholipase A-1 originating from a microorganism or with phospholipase A-2 originating from pancreatin or snake venom and the coexisting fatty acids and/or triglycerides are treated with, for example, acetone to thereby give acylglycerophospholipids (1-1).

Although the abovementioned acylglycerophospholipids (1-2) substantially comprise diacyl-glycerophospholipids, phospholipids obtained from natural sources generally contain several percents of monoacylphospholipids. Therefore the acylglycerophospholipid(s) (1-2) to be used in the present invention comprise 0 to 10 % of monoacylglycerophospholipid(s) based on the total amount of mono and diacylglycerophospholipid(s) by weight.

The acylglycerophospholipid(s) (1-1) which is used in the present invention comprises 10 to 80 % of monoacylglycerophospholipid(s) by weight, preferably 15 to 75 % by weight of monoacylglycerophospholipid(s). based on the total amount of mono and diacylglycerophospholipids.

It is possible to use the acylglycerophospholipid having higher monoacylglycerophospholipid content than 80 % by weight in the present invention, but when the content of the monoacylglycerophospholipid(s) ranges from 80 to 100 % by weight, the effects of the present invention decrease somewhat in degree. Further an increase in the content thereof to 80 % by weight or above is accompanied by various difficulties. It is furthermore undesirable to use monoacylglycerophospholipid(s) at such a high content from the economical viewpoint.

Preferably the acylglycerophospholipid(s) (1) are those originating from natural sources and a mixture of, for example, phosphatidylcholine, phosphatidylethanolamine, phosphatidylinositol, phosphatidylserine and phosphatidic acid. It is undesirable that the acylglycerophospholipid(s) comprises a single phosphatide in a content exceeding 75 % by weight of the whole acylglycerophospholipid(s). More precisely, it is undesirable to employ pure phosphatidylcholine or pure lysophosphatidylcholine or to employ a composition which comprises mono and diacyl choline phosphatid in a total amount exceeding 75 % by weight of the whole acylglycerophospholipid, since sufficient surface activities cannot be achieved in these cases. Table 1 shows the compositions of material suitable for preparing acylglycerophospholipid in present invention. The mixture of mono and diacylglycerophospholipids (1-1) may be prepared by, for example, adding water to diacylglycerophospholipids, treating the resulting mixture with phospholipase A-2 originating from pancreatin to thereby partially hydrolyze the same and removing the fatty acids thus formed and coexisting triglycerides through a treatment with acetone.

The composition of the present invention may comprise a mixture of various synthetic phosphatides, though it costs a great deal.

Table 1

| The compositions of material suitable for preparing acylglycerophospholipid in this invention (% by weight) | | | |
|---|---|---|---|
| | Soya phospholipid | Rapeseed phospholipid | Egg phospholipid |
| phosphatidyl choline | 15 - 30 | 12 - 32 | 70 - 74 |
| lysophosphatidyl choline | 0 - 4 | 0 - 6 | 4 - 6 |
| phosphatidyl ethanolamine | 12 - 27 | 14 - 32 | 13 - 18 |
| lysophosphatidyl ethanolamine | 0 - 2 | 0 - 2 | 2 - 3 |
| phosphatidyl inositol | 10 - 20 | 11 - 20 | 1 |
| lysophosphatidyl inositol | 0 - 1 | 0 - 2 | |
| phosphatidyl serine | 3 - 4 | 1 - 3 | |
| phosphatidic acid | 1 - 4 | 1 - 2 | |
| phosphoglycolipid | 5 - 14 | 5 - 11 | |

The acylglycerophospholipid(s) (1) may be analyzed by various methods including thin layer chromatography, TLC-FID analysis, high-performance liquid chromatography and a combination thereof.

The fatty acid monoglyceride(s) (2), which are another essential component of the composition of the present invention, may be any natural ones, those obtained by the glycerolysis of oil and fat with lipase, and synthetic ones. A constituting fatty acid thereof carries 8 to 12 carbon atoms. i.e., a medium-chain fatty acid monoglyceride. When the constituting fatty acid carries 14 or more carbon atoms, the resulting composition has a low wettability. When it carries seven or less carbon atoms, on the other hand, the resulting composition shows low surface activities and often has a characteristic odor which makes the same inavailable in, particularly, foods and drugs. It is preferable that the abovementioned medium-chain fatty acid monoglyceride contains as much monoester(s) as possible. A synthetic reaction monoglyceride containing 40 to 50 % by weight of monoester(s) is able to be employed therefor. However a monoglyceride containing less than 40 % by weight of monoester(s) would exert only limited effects. It is particularly preferable that the monoglyceride(s) contain 70 % by weight or more of monoester(s). Thus a distilled monoglyceride is suitable therefore.

The fatty acid of the abovementioned medium-chain fatty acid monoglyceride may be a single or mixed one. Although the monoglyceride mad further contain saturated or unsaturated fatty acid(s) other than those carrying 8 to 12 carbon atoms, it preferably contains at least 40 % by weight of medium-chain fatty acid(s) carrying 8 to 12 carbon atoms. For example, the effects of the present invention can be achieved by using monoglyceride(s) of fatty acids comprising 40 % by weight or more of fatty acids carrying 12 carbon atoms and approximately 10 % by weight of those carrying 8 or 10 carbon atoms, such as coconut oil fatty acid or palm kernel oil fatty acid.

When the composition of the present invention consists of monoglyceride(s) of fatty acid(s) carrying 8 to 12 carbon atoms as one component, the acylglycerophospholipid(s) (1), i.e., the other component may be one which comprises diacylglycerophospholipid(s) or one which comprises monoacylglycerophospholipid(s) as the main component. In this case, it is preferable that the ratio of the component (2) to the component (1) ranges from 10/90 to 90/10, still preferably from 20/80 to 80/20. On the other hand, when the composition of the present invention comprises acylglycerophospho-lipid(s) (1) comprising 30 % by weight or less of monoacylglycerophospholipid(s) and fatty acid monoglyceride(s) (2) comprising 50 % by weight or more of saturated long-chain fatty acid(s) in addition to medium-chain ones carrying 8 to 12 carbon atoms, or when the content of monoester(s) in the fatty acid monoglyceride(s) (2) is as low as approximately 50 %. it is preferable that the ratio of the component (2) to the component (1) ranges from 10/90 to 70/30.

When the ratio (2)/(1) is less than 10/90, the surface activities including wettability of the resulting composition are insufficient. When it exceeds 90/10, on the other hand, the resulting composition is insoluble in water. When the composition comprises acylglycerophospholipid(s) containing a large amount of diacylglycerophospholipid(s), or when the monoglyceride(s) contain monoester(s) in an amount as low as approximately 50 %, the solubility of the resulting composition in water is liable to decrease with an increase in the monoglyceride content.

When the composition comprises monoglyceride(s) (2) comprising fatty acid(s) carrying 12 carbon atoms as the main constituting fatty acid and as the other component (1). i.e., acylglycerophospholipid(s) containing 10 to 80 % by weight of monoacylglycerophospholipid(s), namely, acylglycerophospholipid(s) (1-1), it is preferable that the (2)/(1-1) ratio ranges from 10/90 to 80/20, still preferably 20/80 to 70/30. When the ratio is less than 10/90, the resulting composition has insufficient surface activities. When it exceeds 80/20, on the other hand, the resulting composition has an insufficient solubility in water. When the acylglycerophospholipid(s) (1) contain a small amount of monoacylglycerophospholipid(s), i.e., 30 % or less, it is preferable that the (2)/(1-1) ratio ranges from 10/90 to 70/30, since the solubility of the resulting composition in water is low in this case.

When the composition of the present invention comprises monoglyceride(s) (2) comprising fatty acid(s) carrying 12 carbon atoms as the substantially main component and acylglycerophospholipid(s) (1-2) containing 90 % by weight or more of diacylglycerophospholipid(s), the ratio (2)/(1-2) preferably ranges from 10/90 to 55/45.

The composition of the present invention may be prepared by, for example, the following methods.

(1) When fatty acid monoglyceride(s) are employed in a relatively large amount, said monoglyceride(s) are simply heated together with acylglycerophospholipid(s) to form a molten mixture. The resulting mixture is cooled and formulated into a paste or particles to thereby give the composition of the present invention.

(2) When acylglycerophospholipid(s) are employed in a relatively large amount, said phospholipid(s) and fatty acid monoglyceride(s) are dissolved in a small amount of a solvent such as hexane or ethanol to form a solution mixture. Then the solvent is distilled off under reduced pressure and the mixture thus obtained is formulated into a paste, particles or an aqueous solution to thereby give the composition of the present invention.

(3) when monoacylglycerophospholipid(s) are employed in a relatively large amount or when fatty acid monoglyceride(s) comprise a medium-chain fatty acid, these two components are heated in water to form a solution mixture, which is concentrated, if required, to thereby give the composition of the present invention in the form of an aqueous paste or an aqueous solution.

(4) The composition obtained by the abovementioned method (1) or (2) is freed from the solvent, if required, and dissolved in water under heating to thereby give the composition of the present invention in the form of an aqueous solution or an aqueous paste.

The composition of the present invention may further contain other surfactants so long as they do not damage the objects of the present invention. However it should be noted here that the use of a large amount of other surfactant(s) may sometimes lower the effects of the composition of the present invention. The composition of the present invention may contain a small amount of triglycerides or fatty acids as impurities so long as they do not damage the effects of the composition of the present invention.

A micellar solution prepared by dissolving the composition of the present invention in water shows extremely high immersional wettability and adhesional wettability. For example, the immersional wettability and adhesional wettability of the composition of the present invention, which are evaluated from the permeability in the canvas-disc method at room temperature and from the contact angle on a less wettable material such as wax or fat respectively, are extremely higher than that of other safe edible surfactant. And many compositions of the present invention have a high degree of surface activities compared with industrial surfactants such as sodium dodecylsulfate and polyoxyethylenealkylphenolether. As a matter of course, none of the components of the composition of the present invention, i.e., the abovementioned acylglycerophospholipid, monoglyceride of fatty acid(s) carrying 12 carbon atoms, show surface activities described above, when employed alone. A monoglyceride of fatty acid(s) carrying 8 to 10 carbon atoms which contains a large amount, e.g., from 80 % to 90 % of monoester(s) would show relatively high surface activities immediately after dissolution in water under heating. However, these activities would disappear with the crystallization of the monoglyceride accompanying the temperature fall.

The composition of the present invention is available as a penetrating agent, a wetting agent and a spreader. It is further available as, for example, a dispersant for insoluble fine particles, a water-in-oil type emulsifier, an oil-in-water type emulsifier and as a solubilizing agent for a hardly fat-soluble substance in an oil phase.

Among the compositions of the present invention, one containing a relatively large amount of monoacylglycerophospholipid(s) would form a micellar solution in water to thereby give a stable colloidal dispersion. On the other hand, one containing a relatively large amount of glycerol fatty acid mono ester(s) would show precipitation of microcrystals in water when it is allowed to stand in the form of a dispersion for a long time, though it would readily revert to the original dispersion by heating. Thus the composition of the present invention can be readily blended into a cereal dough in the preparation of, for example, bread, noodles (Japanese soba or udon), macaroni or spaghetti.

The composition of the present invention, which is highly safe and has intense surface activities, is widely available, for example, as a wetting agent for improving the wettabilities of powdery food products, hair or dish rinse, as a spreader of agricultural chemicals on the leaves or insects, or in an improvement in the wetting of fiber products such as paper or cloth. More particularly, it is available in oil-in-water or water-in-oil emulsification of oily substances such as edible fats and oils, vegetable essential oils or paraffin; in solubilizing insoluble materials in oil or water; in dispersing, e.g., cocoa powder, powdery instant foods, mildewproofing agents such as butyl p-hydroxybenzoate and various pigments or wetting the same or accelerating the dispersion of the same; or in emulsifying or dispersing these materials under somewhat acidic conditions.

By using the composition of the present invention, proteins such as enzymes can be dissolved and removed from, for example, animal, plant or microbial cell membranes. In addition, the composition of the present invention is available as a highly digestive intestinal nutrition or absorption promoter for drugs through intestine, skin or mucosa, by taking advantage of the high immersional wettability.

The composition of the present invention may be dissolved either in an aqueous phase or in an oily phase by appropriately combining the acylglycerophospholipid(s) (1) and the fatty acid monoglyceride(s) (2).

To further illustrate the present invention, and not by way of limitation, the following Examples will be given wherein each part and % are by weight unless otherwise noted. Hereinafter an acylglycerophospholipid will be simply referred to as "phosphatide", a fatty acid monoglyceride as "monoglyceride". Starting materials:

(1) Phosphatide

(a) Phosphatide (a) : Acetone was added to commercially available soybean phospholipids (lecithin mfd. by Ajinomoto Co., Inc.) and the obtained mixture was heated and then cooled. After removing insoluble matters, the acetone was removed under reduced pressure to thereby give a phosphatide containing 4 % of mono acyl phosphatide which is referred to as phosphatide (a).

(b) Phosphatide (b) : 14 parts of water were added to 100 parts of commercially available phospholipids (lecithin mfd. by Ajinomoto Co., Inc.). Further 0.25 parts of phospholipase A-2 (Lecithase 10-L mfd. by Novo) were added thereto. The obtained mixture was stirred and then allowed to stand at 50 to 55°C for 36 hours to thereby conduct monoacylation. The reaction mixture was dehydrated under reduced pressure and once centrifuged to thereby remove most of triglycerides and fatty acids therefrom. Then the residue was treated with acetone to thereby remove the residual impurities. The insoluble residue was dried under reduced pressure to thereby give a mixture of mono and diacylphosphatides containing 81 % of monoacylphosphatide. This mixture is referred to as phosphatide (b).

(c) Phosphatides (c), (d) and (e) : Defatted soybean phospholipids containing at least 95 % of phospholipids (SLP White mfd. by Tsuru Lecithin Kogyo K.K.) employed as such is referred to as phosphatide (c). 50 parts of water were added to 100 parts of the phosphatide (c) and 0.1 part of Lecithase 10-L were further added thereto. The resulting mixture was allowed to stand at 50 to 55°C for four to eight hours to thereby conduct a reaction. After distilling off the moisture, the obtained reaction mixtures were treated with acetone to thereby give phosphatide (d) containing 44 % of monoacylphosphatide and phosphatide (e) containing 52 % of monoacylphosphatide.

(2) Monoglycerides : Each product employed herein was manufactured by Riken Vitamin Co., ltd.

(a) POEM M-300: Lauric acid monoglyceride comprising 84 % of monoesters, 10 % of diesters and 0.6 % of triester. Iodine value: 1.7, Constituting fatty acids: C12: 98 %.

(b) POEM M-200: Capric acid monoglyceride comprising 92 % of monoesters, 4 % of diesters and no triester. Iodine value: 1.8, Constituting fatty acids: C10: 98 %.

(c) POEM M-100: Caprylic acid monoglyceride comprising 86 % of monoesters, 9 % of diesters and no tirester. Iodine value: 1.7, Constituting fatty acids: C8: 97 %.

(d) EMULSY-MS: Hydrogenated tallow fatty acid monoglyceride comprising 98 % of monoesters. Iodine value: 1.6,

Surface Activity Test :

(1) Immersional wettability

The immersional wettability (wetting time : minute) of a 0.5 % (w/v) aqueous solution of each composition was determined at 25°C according to the modified canvas disk method reported by Seyferth and Morgan (cf. Am. Dyestuff Reptr., 27, 525 (1938)).

(2) Surface tension

The surface tension ($10^{-3}$ N/m (dynes/cm)) of a 0.5 % (w/v) aqueous solution of each composition was determined at 25°C by Wilhelmy's plate method with the use of a surface tension meter CBVPA-3 (mfd. by Kyowa Kagaku K.K.) provided with a platinum plate.

(3) Contact angle on beeswax

The contact angle (degree) of a 0.5 % (w/v) aqueous solution of each composition on beeswax was determined at 25°C with a contact angle measuring device Elmer-13 (mfd. by Elmer Kogaku K.K.).

(4) Dispersibility

20 ml of a 0.25 % (w/v) aqueous solution of each composition and 1 g of titanium white pigment (JR-701 : mfd. by Teikoku Kakogyo K.K.) were introduced into a Nessler tube and vigorously shaken vertically to thereby disperse said pigment in said solution. Then the obtained dispersion was allowed to stand in a room while observing the sedimentation which was evaluated according to the following criterion.

4:     Excellent. No sedimentation was observed after one day.
3:     Very good. Little sedimentation was observed after one day.
2:     Good: The pigment was well dispersed, though  sedimentation was observed after three hours.
1:     Somewhat good: A significant amount of the pigment was dispersed, though aggregation and sedimentation were observed after one hour.
0:     Poor: Dispersion was comparable to that in water, or a significant amount of the pigment aggregated.

Referential Example 1

The phosphatide (a) was mixed with the phosphatide (b) to thereby give mixed phosphatides having various monoacylphosphatide contents. The mixed phosphatides thus obtained as well as the phosphatides (a) to (e) were subjected to the above surface activity test. Table 2 shows the results.

Table 2: Surface activity of 0.5 % solutions of phosphatides

| | Mono acyl phosphatide content (%) | Surface tension $\left(\dfrac{\text{dynes/cm}}{10^{-3}\,\text{N/m}}\right)$ at 25°C | Wetting time (min) at 25°C | Contact angle on beeswax at 25°C | Dispersibility of $TiO_2$ |
|---|---|---|---|---|---|
| phosphatide (a) | 4 | 53.1 | 9.7 | 81 | 1 |
| mixed phosphatide (1) | 10 | 45.4 | 23 | 71 | 1 |
| mixed phosphatide (2) | 20 | 41.9 | 64 | 65 | 2 |
| mixed phosphatide (3) | 30 | 39.4 | 83 | 63 | 3 |
| mixed phosphatide (5) | 50 | 36.3 | 19 | 58 | 2 |
| mixed phosphatide (6) | 60 | 35.2 | 10.9 | 54 | 3 |
| mixed phosphatide (7) | 70 | 34.3 | 5.7 | 48 | 4 |
| phosphatide (b) | 81 | 33.7 | 4.5 | 42 | 4 |
| phosphatide (c) | 3 | 53.4 | 9.1 | | 1 |
| phosphatide (d) | 44 | 36.7 | 37.6 | | 3 |
| phosphatide (e) | 52 | 33.8 | 18.9 | | 2 |

Example 1

The phosphatide (e) and POEM M-300 were dissolved in hexane a different ratios by weight and then the solvent was distilled off to thereby give two compositions. Each composition thus obtained was subjected to the same tests as those described in referential Exampel 1. Tabled 3 shows the results.

Table 3

| Monoglyceride content (%) | Wetting time (min) | Surface tension ($10^{-3}$ N/m (dynes/cm)) | Dispersibility |
|---|---|---|---|
| 30% | 1.7 | 29.0 | 4 |
| 60% | 0.27 | 27.9 | 4 |

Example 2

The phosphatide (d) and POEM M-300 were treated in the same manner as the one described in Example 1 to thereby give three compositions. Each composition thus obtained was subjected to the same tests as those described in Example 1. Table 4 shows the results.

Table 4

| Monoglyceride content (%) | Wetting time (min) | Surface tension ($10^{-3}$ N/m (dynes/cm)) | Dispersibility |
|---|---|---|---|
| 20% | 2.6 | 33.1 | 3 |
| 40% | 1.05 | 29.9 | 4 |
| 60% | 0.44 | 28.4 | 3 |

Example 3

The procedure of Example 1 was repeated except that POEM M-200 was used in a ratio of POEM M-200 (monoglyceride of capric acid) to the phosphatide (e) of 30/70. 60/40 and 80/20 to thereby give various compositions. Each composition thus obtained was subjected to the same tests as those described above. Table 5 shows the results.

Table 5

| Monoglyceride content (%) | Wetting time (min) | Dispersibility ($TiO_2$) |
|---|---|---|
| 30% | 1.07 | 4 |
| 60% | 0.11 | 4 |
| 80% | 0.02 | 3 |

Example 4

The procedure of Example 3 was repeated except replacing the POEM M-200 by POEM M-100 (monoglyceride of caprylic acid) in each of the compositions of Example 3 and each composition thus obtained was subjected to the same tests. Table 6 shows the results.

9

Table 6

| Monoglyceride content (%) | Wetting time (min) | Dispersibility |
|---|---|---|
| 30% | 1.19 | 4 |
| 60% | 0.14 | 3 |
| 80% | 0.03 | 4 |

Example 5

The phosphatide (c) and POEM M-300 were treated in the same manner as the one described in Example 1 to thereby give the following three compositions. Each composition thus obtained was subjected to the same tests as those described in Example 1. The results are as follows.

A composition consists of POEM M-300 and the phosphatide (c) at a ratio of 30/70 showed a wetting time of 0.90 minute and a titanium white dispersibility of 4.

A composition consists of POEM M-300 and the phosphatide (c) at a ratio of 50/50 showed a wetting time of 0.40 minute, a surface tension of 29.9 dynes/cm ($10^{-3}$ N/m), a contact angle of 41° and a titanium white dispersibility of 3.

Comparative Example 1

A composition consists of the phosphatides (c), (d) and (e) and EMULSY MS (hardened beef tallow fatty acid monoglyceride) at a monoglyceride to phosphatide ratio by weight of 50/50 was subjected to the same tests as those described in Example 1. Table 7 shows the results.

Table 7

| Phosphatide | Wetting time(min) | Surface tension ($10^{-3}$ N/m(dynes/cm)) | Contact angle (°) | Dispersibility (TiO$_2$) |
|---|---|---|---|---|
| (c) | 365 | 45.1 | 79° | 0 |
| (d) | 66 | 36.8 | - | 1 |
| (e) | 25.2 | 32.9 | - | 2 |

Comparative Example 2

A 0.5 % solution of sucrose monostearate (Ryoto Ester S 1670-S, mfd. by Mitsubishi Kasei Shokuhin K.K.), which was one of food wetting agents having the highest grade wetting effect, was subjected to the same tests as those described in Example 1. It was found that the wetting period of this material was 12.8 min., the surface tension thereof was 35.0 dynes/cm ($10^{-3}$ N/m) and the contact angle thereof was 64°.

Application Example 1

2 g of each of the following compositions A to C were dissolved in 40 g of ethyl alcohol. 158 g of a cocoa powder (Hersey cocoa, marketed by Fujiya Confectionery Co., Ltd.) were added thereto and the obtained mixture was homogenized under sufficient cooling in a Kenwood mixer. Then the alcohol was removed under reduced pressure and the residue was dried and ground in a mortar. Thus instant cocoa products A to C were obtained.

A:    POEM M-200/phosphatide (e) = 60/40.
B:    POEM C-100/phosphatide (c) = 50/50.
C:    POEM M-300/phosphatide (c) = 50/50.

For comparison, an instant cocoa product was prepared with the use of sucrose monostearate (Ryoto ester S-1670-S: mfd. by Mitsubishi Kasei Shokuhin K.K.). (instant cocoa product D)

10

2 g of each instant cocoa product were gently placed on the surface of 50 ml of water at 20°C contained in a 50 ml beaker and the time taken to substantially submerge the whole cocoa under the water was measured. This procedure was repeated four times on a single sample and the mean of the obtained data was adopted. The results are as follows:

Instant cocoa A:    3 min. and 3 sec.
Instant cocoa B:    1 min. and 59 sec.
Instant cocoa C:    2 min. and 7 sec.
Instant cocoa D:    8 min. and 25 Sec.

Thus the instant cocoa products A to C prepared by using the compositions of the present invention were highly dispersible in water.

Application Example 2

Aqueous solutions of 0.1 % by volume of a composition of POEM M-300 and the phosphatide (e) at a ratio by weight of 60/40 and 0.1 % by volume of Ryoto Ester P-1570 (mfd. by Mitsubishi kasei Shokuhin K.K., sucrose monopalmitate) were both added with 0.06 % by weight of xanthan gum (Echo Gum mfd. by Mevk Co.), each together with a small amount of edible colorant blue No. 1 (Brilliant Blue FCF: mfd. by Sanei Kagaku Kogyo K.K.). Both aqueous solutions were subjected to the following spreading test.

Test pieces (10 x 6 cm) were prepared from the sixth to eighth, counted from the outside, cabbage leaves from which the petioles were removed. These pieces were immersed in 300 ml of the spreader solution at 25°C for ten seconds and then air-dried on filter paper while observing the spreading of the solution.

As a result, the spreader solution compsrising the composition of POEM M-300 and the phosphatide (e) (60/40) showed scarcely and uncolored portion. Namely, the test piece was uniformly colored in this case.

On the other hand, the one colored with the solution comprising sucrose monopalmitate was uneven and showed a number of uncolored portions.

The solution containing no surfactant could hardly color the pieces.

**Claims**

1.  A surfactant composition which consists essentially of (1) acylglycerophospholipid(s) and (2) monoglyceride(s) of fatty acid(s) containing at least 40% by weight of medium-chain fatty acids carrying 8 to 12 carbon atoms, the ratio by weight of the component (2) to the component (1) ranging from 10/90 to 90/10.

2.  The surfactant composition acording to claim 1 which consists essentially of (1-1) acylglycerophospholipid(s) containing 10 to 80% by weight of monoacylglycerophospholipid(s) and (2) monoglyceride(s) of fatty acid(s) carrying 12 carbon atoms, wherein the ratio by weight of said component (2) to said component (1-1) ranges from 10/90 to 80/20.

3.  The surfactant composition according to claim 1 which consists essentially of (1-2) acylglycerophospholipid(s) containing 90% by weight or more of diacylglycerophospholipid(s) and (2) monoglyceride(s) of fatty acid(s) carrying 12 carbon atoms, wherein the ratio by weight of said component (2) to said component (1-2) ranges from 10/90 to 55/45.

4.  The surfactant composition according to claim 2 wherein said acylglycerophospholipid(s) are obtained by partially hydrolyzing acylglycerophospholipids obtained from natural sources or a mixture comprising phosphatidylcholine, phosphatidyl ethanolamine, phosphatidyl inositol, phosphatidic acid or phosphatidyl serine, each having two acyl groups, with phospholipase A to thereby remove fatty acids and triglycerides therefrom.

5.  The surfactant composition according to claim 3 wherein said acylglycerophospholipid(s) are obtained from natural sources or a mixture comprising phosphatidylcholine, phosphatidyl ethanolamine, phosphatidyl inositol, phosphadic acid or phosphatidyl serine, each having two acyl groups.

6.  The surfactant composition according to any of claims 1 to 5, wherein said monoglyceride(s) of fatty acid(s) comprises monoacylglyceride as the main component and the content of said monoacylglyceride amounts to at least 40% by weight, preferably 70% by weight.

**Patentansprüche**

1.  Tensid-Zusammensetzung, die im wesentlichen aus (1) Acylglycerophospholipid(en) und (2) Monoglycerid(en), das (die) mindestens 40 Gew.-% Fettsäuren mittlerer Kettenlänge mit 8 bis 12 Kohlenstoffatomen enthält (enthalten), besteht, wobei das Gewichtsverhältnis des Bestandteils (2) zu dem Bestandteil (1) von 10/90 bis 90/10 reicht.

2.  Tensid-Zusammensetzung nach Anspruch 1, die im wesentlichen aus (1-1) Acylglycerophospholipid-(en), das (die) 10 bis 80 Gew.-% Monoacylglycerophospholipid(e) enthält (enthalten), und (2) Monoglycerid(en) von Fettsäure(n) mit 12 Kohlenstoffatomen besteht, wobei das Gewichtsverhältnis des Bestandteils (2) zu dem Bestandteil (1-1) von 10/90 bis 80/20 reicht.

3.  Tensid-Zusammensetzung nach Anspruch 1, die im wesentlichen aus (1-2) Acylglycerophospholipid-(en), das (die) 90 Gew.-% oder mehr Diacylglycerophospholipid(e) enthält (enthalten), und (2) Monoglycerid(en) von Fettsäure(n) mit 12 Kohlenstoffatomen besteht, wobei das Gewichtsverhältnis des Bestandteils (2) zu dem Bestandteil (1-2) von 10/90 bis 55/45 reicht.

4.  Tensid-Zusammensetzung nach Anspruch 2, worin das (die) Acylglycerophospholipid(e) durch teilweises Hydrolysieren von Acylglycerophospholipiden, erhalten aus natürlichen Quellen, oder eines Gemisches, umfassend Phosphatidylcholin, Phosphatidylethanolamin, Phosphatidylinositol, Phosphatidsäure oder Phosphatidylserin, jeweils mit 2 Acylgruppen, mit Phospholipase A erhalten wird (werden), um somit Fettsäuren und Triglyceride davon zu entfernen.

5.  Tensid-Zusammensetzung nach Anspruch 3, worin das (die) Acylglycerophospholipid(e) aus natürlichen Quellen oder aus einem Gemisch, umfassend Phosphatidylcholin, Phosphatidylethanolamin, Phosphatidylinositol, Phosphatidsäure oder Phosphatidylserin, jeweils mit 2 Acylgruppen, erhalten wird (werden).

6.  Tensid-Zusammensetzung nach einem der Ansprüche 1 bis 5, worin das (die) Monoglycerid(e) oder die Fettsäure(n) als Hauptbestandteil Monoacylglycerid umfaßt (umfassen) und der Gehalt des Monoacylglycerids mindestens 40 Gew.-%, vorzugsweise 70 Gew.-%, beträgt.

**Revendications**

1.  Composition tensioactive qui consiste essentiellement en (1) acylglycérophospholipide(s) et (2) monoglycéride(s) d'acide(s) gras contenant au moins 40% en poids d'acides gras à chaîne moyenne portant 8 à 12 atomes de carbone, le rapport en poids du composant (2) au composant (1) allant de 10/90 à 90/10.

2.  Composition tensioactive selon la revendication 1, qui consiste essentiellement en (1-1) acylglycérophospholipide(s) contenant 10 à 80% en poids de monoacylglycérophospholipide(s) et (2) monoglycéride(s) d'acide(s) gras portant 12 atomes de carbone, dans laquelle le rapport en poids dudit composant (2) audit composant (1-1) va de 10/90 à 80/20.

3.  Composition tensioactive selon la revendication 1, qui consiste essentiellement en (1-2) acylglycérophospholipide(s) contenant 90% en poids ou plus de diacylglycérophospholipide(s) et (2) monoglycéride(s) d'acide(s) gras portant 12 atomes de carbone, dans laquelle le rapport en poids dudit composant (2) audit composant (1-2) va de 10/90 à 55/45.

4.  Composition tensioactive selon la revendication 2, dans laquelle ledit ou lesdits acylglycérophospholipide(s) sont obtenus par l'hydrolyse partielle d'acylglycérophospholipides obtenus à partir de sources naturelles ou d'un mélange comprenant de la phosphatidylcholine, de la phosphatidyléthanolamine, du phosphatidylinositol, de l'acide phosphatidique ou de la phosphatidylsérine, chacun ayant deux groupes acyles, avec une phospholipase A, pour éliminer par ce moyen les acides gras et les triglycérides de ce mélange.

**5.** Composition tensioactive selon la revendication 3, dans laquelle ledit ou lesdits acylglycérophospholipide(s) sont obtenus à partir de sources naturelles ou d'un mélange comprenant de la phosphatidylcholine, de la phosphatidyléthanolamine, du phosphatidylinositol, de l'acide phosphatidique ou de la phosphatidylsérine, chacun ayant deux groupes acyles.

**6.** Composition tensioactive selon l'une quelconque des revendications 1 à 5, dans laquelle ledit ou lesdits monoglycéride(s) d'acides(s) gras comprennent du monoacylglycéride comme composant principal et dans laquelle la teneur dudit monoacylglycéride se monte au moins à 40% en poids, de préférence 70% en poids.